# EUROPÄISCHE PATENTSCHRIFT

(11) **EP 1 108 694 B1**
(45) Veröffentlichungstag und Bekanntmachung des Hinweises auf die Patenterteilung: **16.04.2003**
(21) Anmeldenummer: 00125613.0
(22) Anmeldetag: 23.11.2000
(51) Int. Cl.: C03C 25/62, C03C 25/10, E04B 1/78, B01J 19/12, D06H 1/00

(54) **Verfahren zur Herstellung eines identifizierbaren Faserproduktes**
Method for the production of an identifiable fibre product
Méthode de production d'un produit fibreux identifiable

(30) Priorität: 13.12.1999 DE 19960085
(43) Veröffentlichungstag der Anmeldung: 20.06.2001
(73) Patentinhaber: Österreichische Heraklith GmbH, 9586 Fürnitz (AT)
(72) Erfinder: Krömer, Georg, 10717 Berlin (DE); Herman, Dietmar, 9871 Seeboden (AT)
(74) Vertreter: Becker, Thomas, Dr., Dipl.-Ing.

(56) Entgegenhaltungen:
- WO-A-00/45000
- DE-A- 19 630 478
- DE-U- 29 822 362

## Beschreibung

Die Erfindung betrifft ein Verfahren zur Herstellung eines identifizierbaren Mineralfaserproduktes oder eines Faserproduktes aus tierischen und/oder pflanzlichen Fasern.

Mineralfaserprodukte sind in zahlreichen Konfektionierungen bekannt, beispielsweise als Matten oder Platten oder in Form so genannter Rohrhalbschalen, die gegeneinander gesetzt auf einer Rohrleitung konfektioniert und miteinander verbunden werden.

Es sind auch Mineralfaserprodukte, insbesondere Mineralfasermatten mit einem, auf mindestens einer Hauptoberfläche fixierten gitterartigen Trägermaterial bekannt.

Mineralfaserprodukte der genannten Art werden in einer Vielzahl von verschiedenen Qualitäten und Abmessungen hergestellt.

Um eine Identifizierung zum Beispiel des Herstellers, der Dimensionen, der Wärmekennziffer, der Produktionscharge oder des Fremdüberwachungsinstituts zu ermöglichen schlägt die DE 296 03 918 U1 eine Fasermatte mit einem auf mindestens einer Hauptoberfläche der Fasermatte fixierten, gitterartigen Trägermaterial sowie einem zwischen dem Trägermaterial und der Fasermatte angeordneten Kennzeichnungsstreifen vor, der an seiner dem Trägermaterial zugewandten Seite eine Beschriftung aufweist.

Für Mineralfaserprodukte ohne ein solches Trägermaterial ist aus der DE 32 29 601 A1 das Aufbringen einer Markierung auf ein Mineralfaserprodukt unter Wärme bekannt, nämlich mit Heißlustdüsen.

Die DE 298 22 362 U1 offenbart ein Aufbringen von Markierungen auf Dämmstoffbahnen mittels elektrisch beheizter Walzen, Brennern oder durch die Verwendung eines Markierungsstempels. Die DE 196 30 478 A1 beschreibt eine Laserbeschriftung von Folien.

Nachteilig dabei ist, daß die aufgebrachte Kennzeichnung kein scharfes Konturenbild aufweist. Eine undeutliche Kennzeichnung kann jedoch zu Problemen bei der Identifizierung führen.

Aufgabe der Erfindung ist es deshalb, eine Möglichkeit aufzuzeigen, wie derartige Kennzeichnungen dauerhaft und vollständig identifizierbar auf Mineralfaserprodukte oder Faserprodukte aus tierischen oder/und pflanzlichen Fasern aufgebracht werden können.

Die Erfindung schlägt dazu ein Verfahren zur Herstellung eines identifizierbaren Mineralfaserproduktes oder eines Faserproduktes aus tierischen oder/und pflanzlichen Fasern vor, daß dadurch gekennzeichnet ist, daß auf mindestens einem Oberflächenabschnitt des Mineralfaserproduktes oder des Faserproduktes aus tierischen oder/und pflanzlichen Fasern eine Kennzeichnung mit einem Laserstrahl aufgebracht wird.

Mit einer entsprechenden Lasereinheit kann eine sehr präzise Linienführung zur Erstellung der Kennzeichnung bereitgestellt werden; es ist aber auch möglich, breitere Linienführungen, Symbole oder dergleichen mit der Lasereinheit aufzubringen. Insbesondere wird unter Verwendung eines Laserstrahls eine dauerhafte, kennzeichenstarke Kennzeichnung auf dem Mineralfaserprodukt ermöglicht, die auch nach vielen Jahren, zum Beispiel bei einer Demontage des Mineralfaserproduktes, eine eindeutige (Rück)Identifizierung des Mineralfaserproduktes erlaubt.

Die Kennzeichnung kann aus Buchstaben, Zahlen, Kombinationen von Buchstaben und Zahlen, Symbolen, Linien oder dergleichen bestehen und insbesondere Kennzeichnungen der eingangs genannten Art umfassen.

Die Bestimmungen der DIN 4102 A1 (Nichtbrennbarkeit) für bestimmte Anforderungen sowie die Temperaturbeständigkeit bis beispielsweise 600°C sind sichergestellt.

Dies ist zum Beispiel für die Verkleidung von Rohrleitungen mit sogenannten Dämm-Halbschalen wichtig.

Die Kennzeichnung kann mit dem Laserstrahl auf dem betreffenden Oberflächenabschnitt eingebrannt werden.

Dabei ist es möglich, die Kennzeichnung unmittelbar auf eine Mineralfaser-Oberfläche aufzubringen; es ist aber auch möglich, die Kennzeichnung auf eine Beschichtung aufzubringen, mit der das Mineralfaserprodukt auf dem betreffenden Oberflächenabschnitt bedeckt ist.

In diesem Zusammenhang sind beispielsweise Mineralfaserprodukte bekannt, die aus einem Mineralfaserkern bestehen, der ein- oder beidseitig von einem Vlies, beispielsweise einem Glasvlies, abgedeckt ist, welches mit dem Mineralfaserkern verklebt ist.

Entsprechend kann die Kennzeichnung hier auf den das Mineralfaserprodukt im betreffenden Oberflächenabschnitt abdeckenden Vlies aufgebracht werden.

Das vorstehend im Zusammenhang mit einem Mineralfaserprodukt beschriebene Verfahren läßt sich analog auch auf Faserprodukte anwenden, die aus tierischen und/oder pflanzlichen Fasern bestehen, beispielsweise Schafwollefasern, Flachsfasern, Mischungen daraus oder dergleichen.

## Patentansprüche

1. Verfahren zur Herstellung eines identifizierbaren Mineralfaserproduktes oder eines Faserproduktes aus tierischen oder/und pflanzlichen Fasern, **dadurch gekennzeichnet, dass** auf mindestens einem Oberflächenabschnitt des Mineralfaserprodukts oder des Faserproduktes auf tierischen oder/und pflanzlichen Fasern eine Kennzeichnung mit einem Laserstrahl aufgebracht wird.

2. Verfahren nach Anspruch 1, bei dem die Kennzeichnung mit einem Laserstrahl auf dem betreffenden Oberflächenabschnitt eingebrannt wird.

3. Verfahren nach Anspruch 1, bei dem die Kennzeichnung auf eine Beschichtung aufgebracht wird, die das Faserprodukt auf dem betreffenden Oberflächenabschnitt bedeckt.

4. Verfahren nach Anspruch 3, bei dem die Kennzeichnung auf ein das Faserprodukt im betreffenden Oberflächenabschnitt abdeckendes Vlies aufgebracht wird.

## Claims

1. Method for the production of an identifiable mineral fibre product or a fibre product made of animal and/or vegetable fibres, **characterized in that** on at least one surface section of the mineral fibre product or the fibre product made of animal and/or vegetable fibres a marking is applied on with a laser scanner.

2. Method for the production as defined in claim 1, **characterized in that** said marking is burned in onto the corresponding surface section with a laser scanner.

3. Method for the production as defined in claim 1, **characterized in that** said marking is applied on a coating, which covers the fibre product on the corresponding surface section.

4. Method for the production as defined in claim 3, **characterized in that** said marking is applied on a fleece, which covers the fibre product on the corresponding surface section.

## Revendications

1. Procédé de production d'un produit en fibres minérales identifiable ou d'un produit fibreux en fibres animales et/ou végétales, **caractérisé en ce qu'**un marquage est apposé, au moyen d'un rayon laser, sur au moins une partie de la surface du produit en fibres minérales ou du produit fibreux en fibres animales et/ou végétales.

2. Procédé selon la revendication 1, dans lequel le marquage est apposé par brûlure au rayon laser sur la partie de surface concernée.

3. Procédé selon la revendication 1, dans lequel le marquage est apposé sur un revêtement qui recouvre le produit fibreux au niveau de la partie de surface concernée.

4. Procédé selon la revendication 3, dans lequel le marquage est apposé sur une nappe de fibres qui recouvre le produit fibreux au niveau de la partie de surface concernée.
